# EUROPEAN PATENT SPECIFICATION

(11) **EP 0 449 347 B1**
(45) Date of publication and mention of the grant of the patent: **06.12.1995**
(21) Application number: 91200463.7
(22) Date of filing: 05.03.1991
(51) Int. Cl.: B29C 45/14, A47B 77/08, F24C 15/10

(54) **A process for manufacturing a unit comprising a ceramic glass, to be placed on a top surface**
Verfahren zur Herstellung einer eine keramische Glasplatte enthaltende Einrichtung, die auf eine Fläche gelegt wird
Un procédé de fabrication d'une ensemble comprenant une plaque céramique à placer sur une surface sommitale

(30) Priority: 28.03.1990 ES 9000885
(43) Date of publication of application: 02.10.1991
(73) Proprietor: BALAY, S.A., E-50016 Zaragoza (ES)
(72) Inventor: Lazaro Vela, Santiago, Zaragoza (ES)
(74) Representative: Ungria Lopez, Javier

(56) References cited:
- DE-A- 3 110 087
- DE-A- 3 435 365
- DE-U- 8 904 819
- GB-A- 2 178 692

## Description

The following invention relates to a process for manufacturing a unit comprising a ceramic glass and a frame serving to fasten the unit to the top surface. It is used for the placement of vitroceramic plates, so that the ceramic glass and the support frame of the same form a solid unit.

### BACKGROUND OF THE INVENTION

Conventionally, for placement of ceramic glass, a structure formed by several metallic pieces made by die mold is used, or else a structure formed by one single piece, formed by molding, is used. Compare e.g. DE-A-3110087.

In the event that the structure is formed by several metallic pieces, they remain connected together by welding, one of them acting as the base and the other as the ornamental plate.

Thus, the ceramic glass remains connected to said structure by means of a sealing material, so that firstly said sealing material is deposited on the one that supports the ceramic glass and then the perimetric filling of the glass is carried out in order to obtain adequate tightness, to avoid the accumulation of dirt, to have a perfect finish, to permit total sealing and so that transport of the same is done in accordance with the existing regulations.

This embodiment has several inconveniences such as the metallic structure requiring a subsequent coating, whose process products an additional cost, which makes the product more expensive and a long period of time for the solidification of the sealing material, which makes the assembly of the product longer. Thus, a significant amount of time must pass so that the sealing material completes its solidification process and subsequently continue its assembly.

The claimed process comprises injection moulding, perimetrically, of a plastic material frame, which will remain fastened solidly to the ceramic glass, in such a way that they form a single piece which is then assembled on the top surface.

Thus, the sealing material and its application process are entirely eliminated, causing a savings in the materials used, as well as needing less time to assemble the same, upon avoiding the long solidification period of the sealing material.

On the other hand, the plastic material frame remains ready to be put in place without the need of subsequent treatments, as it happens with the metallic structure which requires subsequent coating.

In order to complement the description that is going to be made hereinafter and for the purpose of providing a better understanding of its characteristics, the present specification is accompanied by a drawing in whose two figures the most significant details of the invention are represented.

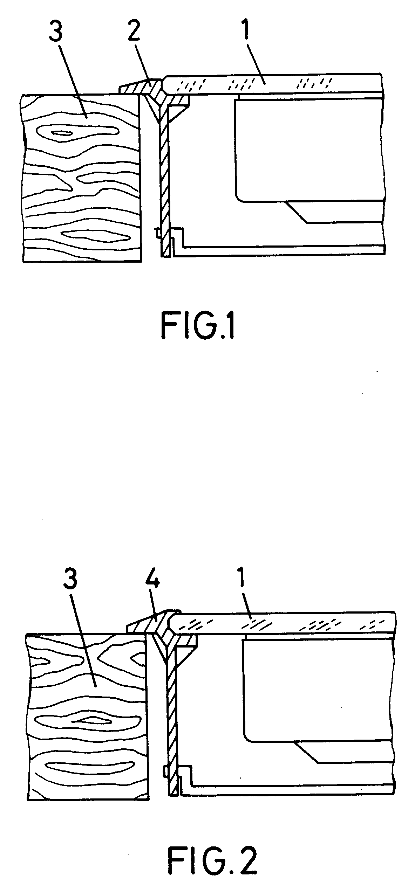

Figure 1 shows a view in which one observes the ceramic glass solid with the plastic material frame and the support of the latter on the top surface.

Figure 2 shows a view in which one observes the ceramic glass solid with the plastic material frame which clasps it along its entire perimeter, upon its top surface and in support of the latter on the top surface.

In view of the cited figures and in accordance with the numbering used, we can observe how the ceramic glass 1, by means of injection moulding, remains solid with a plastic material frame 2, made perimetrically to it and through which it will rest on the top plate 3.

Once the frame 2 has been made by injection moulding, it can be placed on the top surface without the need to give it subsequent treatments, upon remaining as a final finished product with adequate tightness and a perfect sealing in order to prevent the passing of liquids towards the inside of the apparatus.

Thus, a considerable savings is produced, due to the materials used as well as by eliminating the solidification time of the sealing material, with which the ceramic glass is conventionally fastened to the metallic support structure of the same.

Likewise, the ceramic glass 1 can remain in such a way that its entire perimeter remains clasped by the frame 4, reaching its top surface instead of said frame remaining lower than the plane of the top surface of the ceramic glass.

## Claims

1. A process for manufacturing a unit, including a ceramic glass, to be placed on a top surface, said process including the step of manufacturing a frame, for assembly to the top surface, in a mould,
**characterized in that**
the frame is manufactured of a plastic material, and in that the ceramic glass is introduced into the mould before the injection of the plastic material, so that by means of the moulding process the ceramic glass becomes fixed to the frame.

## Patentansprüche

1. Ein Verfahren zur Herstellung einer eine Glaskeramik enthaltenden, auf einer Oberfläche zu plazierenden Einheit, wobei das besagte Verfahren den Schritt der Herstellung in einer Form eines Rahmens zur Anbringung an der Oberfläche umfasst, dadurch gekennzeichnet, dass der Rahmen aus einem Kunststoff hergestellt wird, und dass die Glaskeramik vor Einspritzen des des Kunststsoffs in die Form eingeführt wird, so dass die Glaskeramik durch den Formprozess am Rahmen befestigt wird.

## Revendications

1. Un procédé pour fabriquer une unité, qui comprend un verre céramique, à être placé sur une surface supérieure, ce procédé comprenant la phase de fabriquer une structure, pour montage sur la surface supérieure, dans un moule, caractérisé en ce que la structure est fabriquée d'un matériel plastique, et en ce que le verre céramique est introduit dans le moule avant l'injection de matériel plastique, de sorte que, à l'aide du procédé de moulage, le verre céramique reste fixé à la structure.
